# FASCICULE DE BREVET EUROPEEN

(11) **EP 4 363 779 B1**
(45) Date de publication et mention de la délivrance du brevet: **27.08.2025**
(21) Numéro de dépôt: 22735001.4
(22) Date de dépôt: 30.06.2022
(51) Int. Cl.: F24S 40/20

(54) **ROBOT NETTOYEUR POUR CENTRALE SOLAIRE**
REINIGUNGSROBOTER FÜR EIN SOLARKRAFTWERK
CLEANING ROBOT FOR A SOLAR POWER PLANT

(30) Priorité: 01.07.2021 LU 102836
(43) Date de publication de la demande: 08.05.2024
(73) Titulaire: Solarcleano S.à r.l., 8346 Grass (LU)
(72) Inventeur: TIMMERMANS, Christophe, 8355 Garnich (LU); KOKKAS, Andreas, 1362 LUXEMBOURG (LU)
(74) Mandataire: Office Freylinger
(86) Numéro de dépôt international: PCT/EP2022/068046
(87) Numéro de publication internationale: WO 2023/275234

(56) Documents cités:
- EP-A1- 2 330 363
- EP-A1- 3 817 222
- WO-A1-2016/006246
- WO-A2-2012/168070
- US-A1- 2020 164 414

## Description

### Domaine technique

La présente invention concerne généralement le domaine du nettoyage des capteurs solaires, et en particulier un robot nettoyeur de capteurs solaires.

### Etat de la technique

L'industrie solaire connait un développement rapide car le soleil constitue une source d'énergie renouvelable infinie, apportant donc une solution permettant la réduction des émissions.

Les capteurs solaires ont généralement la forme de panneaux, qui sont typiquement assemblés en rangées, par exemple sur des toitures ou des tables support fixées au sol (ou autres). On distingue généralement les capteurs solaires photovoltaïques des capteurs solaires thermiques.

Un capteur solaire photovoltaïque (également appelé module photovoltaïque) génère de l'énergie électrique en convertissant la lumière du soleil. Le module photovoltaïque est constitué de cellules solaires reliées entre elles électriquement.

Les capteurs solaires thermiques, encore connus sous le nom de capteurs solaires ou panneaux solaires, sont des dispositifs conçus pour recueillir l'énergie solaire transmise par rayonnement et la transférer à un fluide caloporteur (gaz ou liquide) sous forme de chaleur. Également en forme de panneaux, ils sont souvent montés sur les toits et utilisés pour produire de l'eau chaude sanitaire ou de chauffage.

Au niveau industriel, on trouve des centrales solaires photovoltaïques, dans lesquelles les modules photovoltaïques sont agencés en champs qui comprennent une pluralité de lignes ou rangées parallèles de modules photovoltaïques.

Il est important de nettoyer la surface de ces capteurs solaires afin d'en garantir l'efficacité.

Pour des capteurs solaires en toiture, le nettoyage peut se faire manuellement (opérateur avec balai et jet d'eau sur le toit). Lorsque la pente du toit augmente et/ou la superficie des capteurs solaires, on pourra utiliser un bras articulé avec une brosse (si la toiture n'est pas trop haute), ou des robots à chenilles télécommandés (voir par exemple WO 2020/200694 A1) qui se déplacent sur les panneaux.

Dans le cas des installations industrielles, types centrale ou fermes solaires, qui comprennent des grands ensembles de panneaux montés au sol, le nettoyage peut être effectué par des dispositifs à brosses qui se déplacent sur les rangées de capteurs solaires, guidés par des rails placés sur les panneaux et/ou leurs bords. De tels dispositifs sont connus par exemple du DE 10 2010 025 845 A1.

D'autres dispositifs à brosse sont connus, par exemple de WO 2016/006246 A1. Selon un tel dispositif, la brosse est mise au contact, de manière forcée, avec la surface du panneau solaire à nettoyer et plaquée contre celle-ci à l'aide de ressorts. La pression résultante peut endommager les panneaux solaires.

On peut également faire appel à des véhicules circulant, sur le sol, entre les rangées de capteurs solaires, et équipés des moyens de nettoyage. Le EP 2 567 758 décrit par exemple un ensemble de nettoyage comprenant une brosse fixée à un bras articulé à commande hydraulique, destiné à être monté sur un engin agricole tel qu'un tracteur.

Le pilotage d'un tel engin est complexe, car le bras est contrôlé par le chauffeur qui se trouve à côté de la rangée, et qui doit estimer l'orientation/inclinaison de la brosse et la distance par rapport à la surface des capteurs solaires.

Plusieurs points sont critiques à cet égard. La distance brosse-panneaux doit être maîtrisée afin que la pression appliquée sur les panneaux ne les endommage pas. L'inclinaison de la brosse est aussi importante : pour une pression uniforme et garantir que la rangée de panneaux est nettoyée sur toute la largeur, la brosse doit être bien parallèle au plan des panneaux. A ce titre, la solution envisagée par EP 2 567 758 semble plus risquée : les défauts de planéité du sol entre les rangées provoquent des déplacements importants de la brosse (bras de levier). Il en va de même pour la solution envisagée par le US 2020/164414 A1, qui décrit également un ensemble de nettoyage comprenant une brosse fixée à un bras articulé à commande hydraulique monté sur un véhicule.

### Objet de l'invention

L'invention a pour but de fournir un véhicule de conception améliorée, permettant un contrôle efficace et sûr de l'outil de nettoyage, et conçu spécialement pour se déplacer dans les centrales solaires.

### Description générale de l'invention

L'invention concerne un robot nettoyeur de capteurs solaires comprenant :
un châssis de type portique configuré pour enjamber une rangée de capteurs solaires et définir un espace de nettoyage correspondant ;
des roues fixées au portique pour son déplacement et associées à des moyens d'entrainement ;
un outil de nettoyage s'étendant dans la largeur du portique et mobile dans l'espace de nettoyage pour être positionné par rapport à la surface supérieure des capteurs solaires, l'outil de nettoyage étant guidé au moyen de rails de guidage fixés au châssis ;
des moyens d'actionnement pour déplacer l'outil de nettoyage le long des rails de guidage ;
au moins un capteur de distance agencé pour déterminer une distance entre l'outil de nettoyage et un panneau solaire respectif ;
une unité de commande connectée au(x) capteur(s) de distance et configurée pour ajuster la position de l'outil de nettoyage par rapport aux panneaux solaires d'une rangée, via les moyens d'actionnement,
dans lequel :
   le châssis comprend deux montants latéraux reliés en partie supérieure par un membre transversal, un desdits rails de guidage étant fixé à chacun des montants latéraux,
   l'outil de nettoyage comporte du côté de ses extrémités un élément de guidage respectif, qui coopère avec un rail de guidage associé,
   les deux rails de guidage définissent un plan de déplacement de l'outil de nettoyage et l'un des rails de guidage est monté articulé sur l'un des montants latéraux de sorte à être pivotant dans le plan de déplacement, et
   les moyens d'actionnement comprennent, aux deux extrémités de l'outil de nettoyage, un actionneur respectif lié au châssis, et connecté à l'outil de nettoyage, respectivement à l'élément de guidage.

L'invention propose ainsi un robot nettoyeur de type portique apte à enjamber des capteurs solaires, notamment une rangée de capteurs solaires. L'outil de nettoyage, en particulier du type à brosse, évolue dans l'espace de nettoyage du robot, dans lequel se trouve le(s) panneau(x). L'usage de capteurs de distance permet d'ajuster en continu ou quasi-continu (c.à.d. en temps réel) la distance de l'outil de nettoyage par rapport à la face supérieure des panneaux solaires à nettoyer, lorsque l'outil de nettoyage se déplace. L'outil de nettoyage est donc normalement maintenu à une distance prédéterminée de la surface des panneaux solaires.

Dans des variantes, la tige d'actionnement d'un actionneur linéaire est connectée à l'outil de nettoyage, de manière directe, ou de manière indirecte par l'intermédiaire de l'élément de guidage. La présence d'actionneurs linéaires respectifs aux deux extrémités de l'outil de nettoyage permet une commande indépendante de chaque côté de l'outil de nettoyage, ce qui permet des déplacements de longueurs différentes à chaque extrémité de l'outil de nettoyage, afin d'adapter l'angle de celui-ci à l'inclinaison du panneau solaire à nettoyer.

La construction du robot selon l'invention est particulièrement avantageuse par rapport aux solutions connues, notamment par rapport au tracteur à brosse hydraulique décrit dans le EP 2 567 758 :
- la forme portique permet d'enjamber les panneaux à nettoyer. Il est ainsi possible de supporter l'outil de nettoyage sous le portique en évitant les porte à faux, améliorant la précision de la manœuvre.
- la forme portique réduit l'empreinte au sol du robot, qui peut circuler dans des espaces inter-rangées étroits. Par exemple, le présent robot peut circuler dans un espacement entre rangée de l'ordre de 60 cm, alors qu'un tracteur a besoin d'un espacement de 3 m entre rangées de panneaux solaires.
- la position de l'outil de nettoyage est ajustée automatiquement grâce aux capteurs
- la structure avec rails de guidage de part et d'autre de l'outil de nettoyage permet un guidage vertical robuste.

Bien que le présent robot nettoyeur a été développé pour le nettoyage de capteurs solaires photovoltaïques présentant une surface d'exposition au soleil plane, ce robot trouve application, moyennant le cas échéant quelques adaptations de dimensions et/ou de l'outil de nettoyage, pour tout type de capteurs solaires, qu'ils soient photovoltaïques ou thermiques, plans ou incurvés.

Les montants latéraux et membre transversal sont de préférence ajourés pour limiter le poids. Ils peuvent être réalisés à partir de tous types d'éléments tels que par ex. poutres, profilés et tubes. Ces éléments peuvent être en métal, en particulier alliage d'aluminium ou acier, ou en composite.

L'outil de nettoyage est avantageusement du type à brosse, pouvant comporter une ou plusieurs brosses, configurée(s) pour s'étendre dans la largeur du portique.

L'outil de nettoyage comprend de préférence au moins une brosse rotative s'étendant dans la largeur du portique selon un premier axe.

Selon des variantes, la brosse rotative est une brosse cylindrique ayant un axe central parallèle au, ou concentrique avec, le premier axe, et est entrainée en rotation autour de l'axe central. La brosse cylindrique a une longueur prédéterminée, adaptée à la largeur de la rangée à nettoyer. La brosse cylindrique peut être constituée d'une ou de plusieurs sections. Lorsque la brosse présente plusieurs sections de brosse, les poils de brosse sont de préférence agencés pour couvrir les zones de joint entre deux sections de brosse adjacentes.

Dans des variantes, l'outil de nettoyage comprend une deuxième brosse rotative cylindrique dont l'axe central est parallèle au premier axe et décalé de celui-ci, ladite autre brosse étant entrainée en rotation autour de son axe central. Les deux brosses de nettoyage sont ainsi disposées côte à côte, c'est-à-dire l'une derrière l'autre dans la direction de nettoyage.

D'autres configurations d'outils de nettoyage à brosse peuvent être envisagées. Par exemple, selon une autre variante, une pluralité de brosses rotatives axiales sont fixées sur une traverse support s'étendant dans la largeur du portique. Les brosses radiales sont agencées côte à côte de façon à couvrir la largeur du portique. Chaque brosse rotative axiale comporte un axe de rotation qui s'étend sensiblement perpendiculaire à la traverse support, et donc en utilisation à la surface des panneaux solaires à nettoyer.

Les brosses ont des poils/fibres réalisés en tout matériau adapté au nettoyage de panneaux solaires, par exemple en Nylon, microfibres, mousse.

L'exemple de réalisation présenté ici se réfère au nettoyage de panneaux solaires plans, de sorte que la brosse a une courbure nulle entre ses deux extrémités. Le robot nettoyeur selon l'invention peut cependant être facilement adapté au nettoyage de tout type de capteur solaire, par exemple des capteurs solaires thermiques de forme cylindro-parabolique, et la brosse présente dans ce cas entre ses extrémités un profil extérieur correspondant à la courbure de la surface du capteur solaire à nettoyer, de manière à assurer un contact de la brosse sur l'ensemble de la surface à nettoyer et par conséquent un nettoyage uniforme du capteur solaire.

Dans d'autres modes de réalisation, l'outil de nettoyage peut comprend tout autre configuration de brosses, raclettes et/ou ou tissus s'étendant dans la largeur du portique, aptes à nettoyer la surface des capteurs solaires.

Dans des variantes, le robot comprend en outre des moyens de projection de liquide de lavage, par exemple de l'eau. Ces moyens de projection peuvent comprendre des gicleurs ou des buses fixés au portique ou directement sur l'outil de nettoyage, afin de projeter des jets de liquide de nettoyage, ou aspersion, vers les capteurs solaires. Dans ce cas le robot comprend un ou plusieurs réservoirs d'eau, des buses de projection et un circuit de distribution avec pompe reliant les réservoirs aux buses.

Selon les variantes, les actionneurs linéaires peuvent prendre toute forme / configuration appropriée pour guider l'outil de nettoyage ; ils peuvent notamment avoir leurs tiges orientées dans la même direction ou opposée.

Dans des variantes, un élément de guidage comprend une partie de guidage par laquelle il est assujetti au rail de guidage, et une partie de jonction fixée articulée à une extrémité de l'outil de nettoyage. Le moyen d'actionnement est préférablement connecté à cet élément de guidage.

Dans des variantes, les moyens d'actionnement peuvent comprendre des actionneurs fixés au châssis, par exemple en partie supérieure, notamment sur l'élément transversal, et des systèmes de câbles et poulies, ou des systèmes à chaines ou crémaillère, reliant les actionneurs aux éléments de guidage.

Le robot nettoyeur selon l'invention comprend au moins un capteur de distance, agencé pour déterminer la distance entre la brosse et la surface des panneaux à nettoyer. Selon des modes de réalisation préférés, le robot nettoyeur comprend deux, quatre ou six capteurs de distance, permettant une détermination plus précise de la position de la brosse et de son orientation par rapport à la surface des panneaux solaires. Les capteurs de distance sont préférablement montés sur la structure support de brosse, solidaire en mouvement avec la brosse sous l'effet des moyens d'actionnement, donc à proximité de la brosse rotative elle-même. Les capteurs de distance mesurent typiquement la distance dans la direction sensiblement verticale, donc essentiellement au droit de la position de la brosse rotative.

L'orientation de l'outil de nettoyage peut être contrôlée par deux capteurs de distance, placés à chaque extrémité de l'outil de nettoyage, afin de détecter les régions de bord de la rangée.

De préférence, les capteurs sont agencés par paires, un capteur étant positionné sur l'avant de la brosse et un capteur étant sur l'arrière (par rapport au sens de déplacement). L'avant de la brosse correspond à la face de la brosse situé du côté de la surface sale à nettoyer et l'arrière correspond à la face de la brosse situé du côté de la surface nettoyée. Le robot peut ainsi fonctionner dans deux directions. Les capteurs permettent également de détecter la fin de rangée, ou un espace entre des panneaux dans une rangée.

Avantageusement, une paire de capteurs est agencée à chaque extrémité de la brosse. Selon le type d'installation solaire à nettoyer, par exemple dans le cas du nettoyage de trackers solaires supportant des panneaux solaires conventionnels, il est également avantageux de munir la brosse d'une troisième paire de capteurs, agencés au milieu de la brosse dans sa longueur, permettant de détecter d'éventuelles surépaisseurs situées au milieu (dans le sens de la largeur du portique) du tracker, et donc de relever la brosse ponctuellement.

Les capteurs solaires agencés en rangées dans l'installation de capteurs solaires ne sont pas nécessairement au contact les uns des autres, de sorte qu'un espace libre peut être formé, dans la direction X, entre deux panneaux adjacents d'une même rangée. L'unité de commande est avantageusement configurée pour exploiter le signal de capteur de sorte que cet espace soit reconnu comme tel et ne pas abaisser la brosse.

Tout type de capteur de distance connu peut être utilisé comme capteur de distance selon l'invention, en particulier les capteurs de type LIDAR, de type émetteur et détecteur d'ultrasons ou encore de type caméra. Lorsque le robot nettoyeur comprend plus d'un capteur de position, les différents capteurs peuvent être identiques ou différents les uns des autres.

Ces modes de réalisations et éventuellement d'autres aspects sont repris dans les revendications dépendantes en annexe.

### Description détaillée à l'aide des figures :

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
Fig. 1 une vue en perspective d'un mode de réalisation d'un robot nettoyeur selon l'invention ;

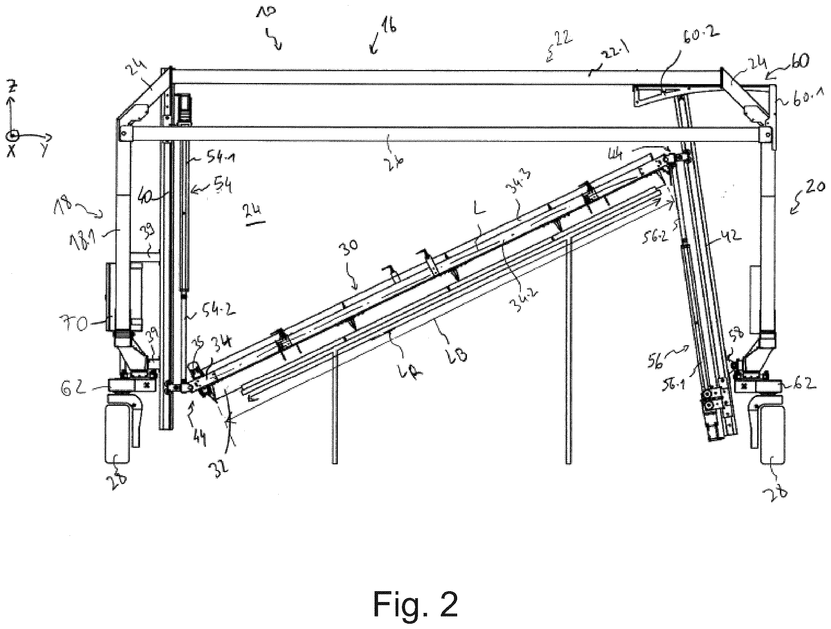

Fig. 2 une vue de face du robot nettoyeur de la Figure 1 ;

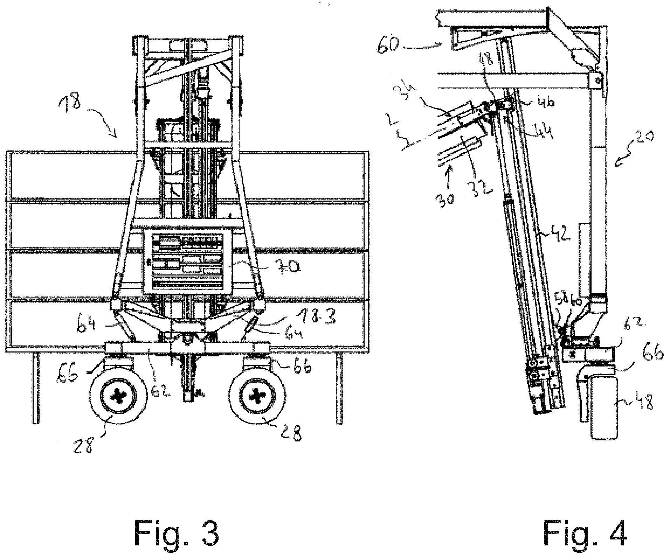

Fig. 3 une vue de côté du robot nettoyeur de la Figure 1 ;
Fig. 4 une vue rapprochée du montant droit du robot nettoyeur de la Fig.1 ;

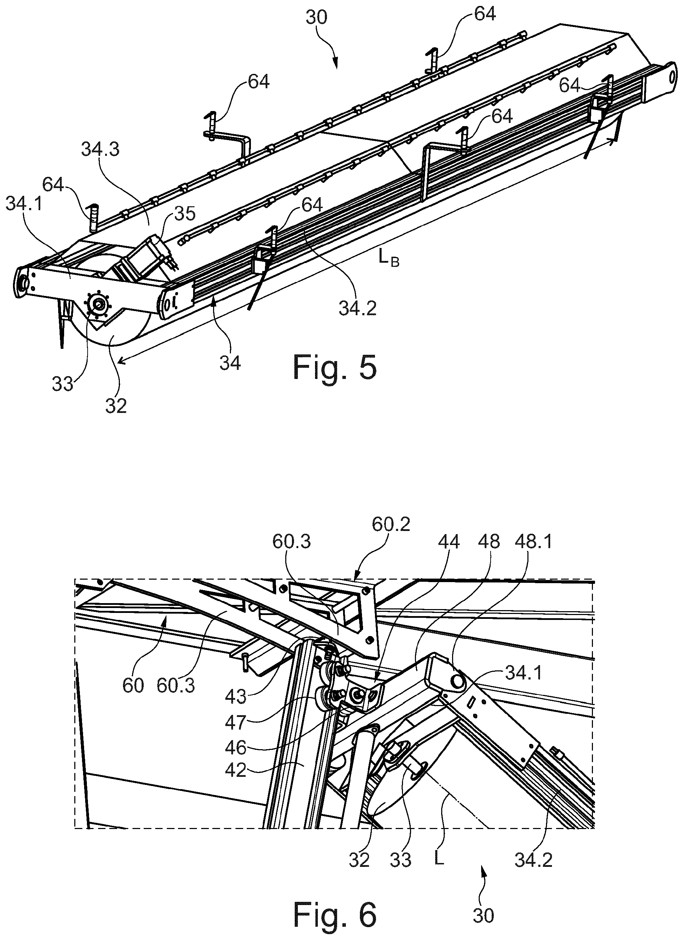

Fig. 5 : une vue en perspective de la brosse montée dans son cadre support ;
Fig.6 : une vue de détail, en perspective, du rail pivotant dans la glissière ; et
Fig.7 : une vue de détail, du dessus, de l'élément de guidage sur le rail vertical.

La présente invention sera décrite sur base d'un exemple d'application aux robots nettoyeurs de panneaux solaires plans, tels que des panneaux photovoltaïques présentant une surface d'exposition au soleil plane.

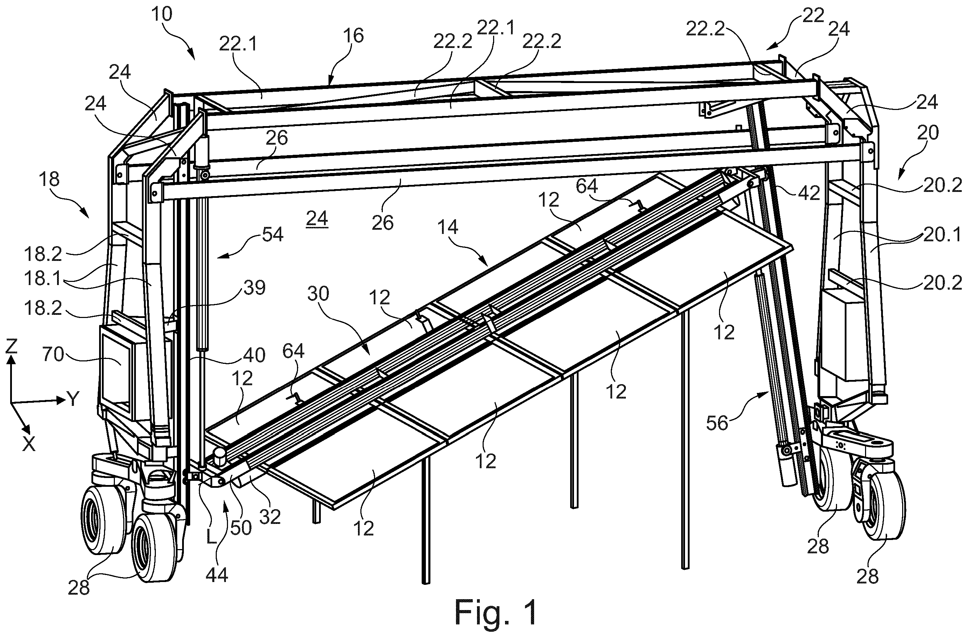

La Figure 1 montre une vue en perspective d'un robot nettoyeur 10 de capteurs solaires selon un mode de réalisation de la présente invention.

Les capteurs solaires 12 (ou panneaux solaires) sont généralement disposés en rangées parallèles entre elles, ancrées au sol. Le sol supportant les capteurs solaires 12 définit un plan horizontal par rapport à l'orientation des dessins, i.e. un plan (X, Y) en référence au repère orthogonal direct indiqué sur la planche de dessins pour faciliter l'exposé. Sur la Figure 1, les panneaux solaires 12 sont alignés afin de former des rangées dans la direction X et le robot nettoyeur se déplace selon cette direction X lors du nettoyage des panneaux solaires 12. La rangée 14 est illustrée symboliquement ; on voit ici uniquement deux ensembles de quatre panneaux. En pratique, une rangée comporte une multiplicité de cet ensemble de quatre panneaux, agencés bouts à bouts dans la direction X.

Le robot 10 comprend un châssis 16 de type portique (forme générale en U inversé) comprenant deux montants latéraux 18, 20 reliés en partie supérieure par un membre transversal 22. L'espace entre les montants latéraux 18, 20 et le membre transversal 22 constitue un espace de nettoyage 24, par lequel le robot 10 va enjamber, en utilisation, une rangée 14 de capteurs solaires. On notera que le repère XYZ est défini par rapport au robot 10 et comprend donc trois axes perpendiculaires deux à deux, à savoir : l'axe horizontal X, parallèle au sol et correspondant à la direction générale de déplacement du robot 10 en suivant la rangée de panneaux solaire; l'axe transversal horizontal Y, également parallèle au sol et perpendiculaire à l'axe X, selon lequel s'étend le membre transversal 22; et l'axe vertical Z, perpendiculaire au sol ainsi qu'au au plan XY horizontal.

De manière générale, les dimensions du châssis 16, en particulier sa hauteur H_{P} selon la direction Z et sa largeur L_{P} selon la direction Y, sont définies en fonction des caractéristiques des panneaux solaires 12 à nettoyer, et de l'espace inter-rangées, de sorte que le châssis puisse enjamber les panneaux solaires avec une certaine marge de manœuvre.

Les différents éléments du châssis 16, notamment les montant latéraux 18, 20 et le membre transversal 22 sont typiquement réalisés à partir de profilés, tubes (de sections rectangulaires ou autres) et/ou poutres, assemblés par tous moyens appropriés, notamment rigidement, par exemple par soudure, vissage et/ou rivetage.

Les membres latéraux 18, 20 comprennent, dans la présente variante, des tubes extérieurs 18.1, 20.1 s'étendant généralement dans la direction verticale et reliés par des traverses 18.2, 20.2. Le membre transversal 22 comprend deux tubes 22.1 parallèles qui joignent les parties supérieures des montants latéraux 18, 20. Des traverses 22.2 perpendiculaires ou obliques viennent relier les deux tubes 22.1 parallèles, pour le renfort. Les extrémités des tubes parallèles 22.1 sont reliées aux tubes extérieurs 18.1, 20.1 par des pièces de jonction 24 inclinées. Deux tubes de renfort 26 horizontaux relient deux à deux les tubes extérieurs opposés, à la base des pièces de jonction.

Les membres latéraux 18, 20 et le membre transversal 22 sont réalisés en tant qu'éléments indépendants (préassemblés), puis ces trois éléments principaux sont assemblés. La liaison peut se faire par tout moyen approprié, par ex. soudage, vissage, rivetage, etc. L'emploi de moyen de liaison amovibles tels que boulons permet un démontage plus facile. La facilité de démontage trouve un intérêt, dans certaines variantes non montrées, où l'on dispose de plusieurs membres transversaux de longueurs différentes. Cela permet de changer le membre transversal pour adapter la largeur du robot nettoyeur à la largeur des panneaux solaires à nettoyer et à la distance entre rangées de panneaux solaires. Une autre alternative (non représentée) consiste à employer un membre transversal télescopique avec tubes télescopiques.

Le robot nettoyeur 10 se déplace sur le sol au moyen de roues 28, fixées en partie inférieure des montants latéraux 18, 20 et associées à des moyens d'entrainement. Dans la variante, deux roues 28 sont fixées sous chaque montant 18, 20, alignées dans la direction de déplacement (axe X). Ces roues sont avantageusement pivotantes à 360° et l'une au moins, de préférence les deux, sont motrices et réglables angulairement. Ces jeux de roues permettent au robot 10 d'assurer de manière autonome son déplacement dans l'installation de panneaux solaires à nettoyer, en particulier le long d'une rangée de panneaux solaires et de manœuvrer entre les rangées.

L'utilisation de roues 28 pivotantes à 360° facilite la manœuvre du robot nettoyeur, notamment lorsqu'il atteint la fin d'une rangée de capteurs solaires. Grâce aux roues pivotantes, il n'est pas nécessaire que le robot effectue un demi-tour en bout de rangée afin de se positionner pour le nettoyage de la rangée suivante, mais il suffit qu'il se déplace selon la direction Y d'une rangée à l'autre. Le robot nettoyeur 10 selon l'invention peut donc être utilisé pour nettoyer des installations de capteurs solaires n'offrant pas ou peu d'espace libre (i.e. dépourvu de capteur solaire) nécessaire en fin de rangée pour que le robot effectue un demi-tour.

Il sera apprécié que le robot nettoyeur 10 comprend un outil de nettoyage 30 agencé dans l'espace de nettoyage 24 du robot 10. L'outil de nettoyage 30 est de forme allongée, s'étendant le long d'un axe L, dans la largeur du portique et est mobile dans l'espace de nettoyage, c'est-à-dire globalement dans la direction verticale.

Dans le présent mode de réalisation, l'outil de nettoyage 30 comporte une brosse cylindrique 32 dont l'axe central 33 est parallèle ou concentrique à l'axe L. La brosse 32 est rotative autour de son axe central 33. La brosse 32 présente une longueur L_{B} le long de l'axe L dans la direction de la largeur du portique. La longueur de brosse L_{B} correspond au moins à la largeur L_{R} d'une rangée 14 de panneaux solaires à nettoyer.

Tout type de brosse peut être utilisé, par exemple la brosse peut être une brosse en Nylon ou la brosse peut être une brosse en microfibres, en fonction du nettoyage à effectuer, par exemple de la nature des salissures des panneaux solaires, ou de la fréquence du nettoyage. La brosse peut également permettre d'évacuer une couche de neige fraichement tombée sur les panneaux pour garantir la production. Les poils peuvent être droits ou hélicoïdaux.

La brosse 32 peut être une brosse cylindrique formée en une seule partie (section unique), ou peut être constituée de plusieurs sections de brosse accolées les unes aux autres dans la direction L. Dans le premier cas, un tube noyau ayant la longueur de brosse désirée support les poils de brosse qui s'étendent sensiblement radialement. Dans les cas d'une brosse en plusieurs sections, les poils de brosses sont implantés de sorte qu'ils s'étendent également au-dessus des joints de section de brosses. Ainsi, lorsque la brosse est constituée d'une pluralité de sections de brosse, elle présente une surface cylindrique uniformément recouverte de poils de brosses, de sorte que l'intégralité de la largeur capteur solaire dans la direction de la largeur du portique soit en contact avec des poils de brosse, afin d'assurer un nettoyage uniforme de la surface.

En pratique, la brosse cylindrique 32 est montée dans un cadre support 34 qui comprend deux pièces d'extrémités 34.1 supportant l'axe de rotation 33 de la brosse, les pièces d'extrémité étant reliées par des profilés latéraux 34.2. Un carter de protection 34.3 fixé au cadre 34 couvre le dessus de la brosse 32.

Un moteur électrique 35 est intégré dans le cadre 34 et couplé à l'axe 33 de la brosse. Le moteur électrique 35 permet d'entrainer sélectivement la brosse en rotation.

Optionnellement, l'outil de nettoyage peut comprendre une deuxième brosse cylindrique (non montrée), dont l'axe de rotation est parallèle, mais décalé, de l'axe de rotation de la brosse 32. La deuxième brosse est de même longueur que la première, de conception identique ou similaire. La deuxième brosse peut également être montée dans le cadre support (dont les dimensions peuvent être adaptées).

Les brosses peuvent être identiques ou différentes, par exemple présenter un diamètre externe différent ou être constituées de poils de nature différente, permettant par exemple un premier nettoyage grossier de la surface à l'aide de la première brosse et une finition à l'aide de la seconde brosse.

L'outil de nettoyage 30 est guidé dans l'espace de nettoyage 24 par des rails de guidage 40, 42 fixés au châssis 16. Plus précisément, un rail de guidage 40, 42, rectiligne, est fixé à chacun des montants latéraux 18, 20, du côté intérieur, selon une direction sensiblement verticale. Le rail 40 est fixé au montant latéral 18 par deux supports 39 L'outil de nettoyage 30 est relié à chacune de ses deux extrémités à l'un des rails de guidage 40, 42 via un élément de guidage 44.

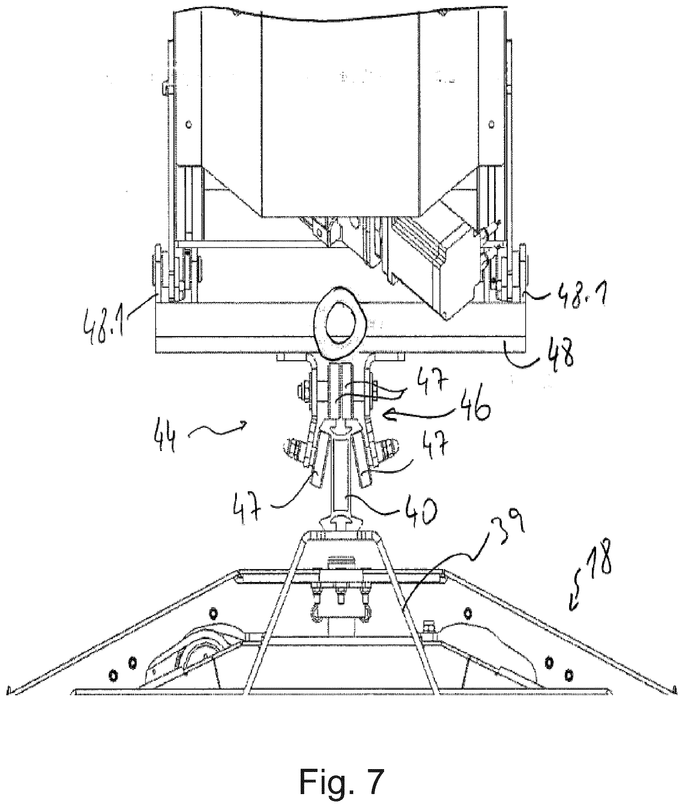

Comme on le voit mieux à la Fig.7, l'élément de guidage 44 comprend une partie de guidage 46, apte à se déplacer linéairement le long du rail de guidage 40, 42, et une partie de jonction 48, fixée de manière articulée au cadre support 34 de l'outil de nettoyage 30. La partie de guidage 46 est assujettie au rail de guidage au moyen d'une liaison de type glissière (translation). Par exemple, le rail peut être un profilé creux, dans lequel coulisse la partie de guidage. Alternativement, comme c'est le cas ici, la partie de guidage 46 peut être réalisée à la manière d'un chariot avec des galets 47 de contact, qui viennent enserrer de manière complémentaire une partie du profil du rail (par ex. partie de rail en T ou autres formes appropriées).

La partie de jonction 48 est liée rigidement à la partie de guidage 46 et prend ici la forme d'un étrier dont les branches latérales 48.1 sont fixées pivotantes au extrémités 34.1 du cadre support 34 de la brosse 32.

Deux actionneurs linéaires 54, 56 sont agencés de part et d'autre de l'outil de nettoyage 30 le long des rails de guidages 40, 42. L'actionneur, de type vérin électrique, a un corps 54.1, 56.1 fixé d'une part à un rail de guidage respectif et une tige d'actionnement 54.2, 56.2 fixée à un élément de guidage 44.

Un mouvement d'un actionneur 54, 56 entraîne le déplacement de l'élément de guidage 44 auquel il est lié sur le rail de guidage correspondant, et par conséquent le déplacement de l'extrémité de brosse. Ainsi, le mouvement de l'actionneur se transmet à l'outil de nettoyage 30 par l'intermédiaire de l'élément de guidage 44, qui est relié à la fois à l'actionneur 54, 56, au rail de guidage 40, 42 et à l'outil de nettoyage 30.

Les actionneurs 54, 56 permettent une commande indépendante de chaque côté de l'outil de nettoyage 30, ce qui permet des déplacements de longueurs différentes à chaque extrémité de l'outil de nettoyage, afin de changer l'angle de la brosse (angle entre axes L et Z).

On notera que les deux actionneurs 54, 56 sont agencés de manière antagoniste. Le vérin 54 (à gauche) fixé à la partie supérieure du rail 40 et a sa tige d'actionnement 54.2 vers le bas (parallèle au rail), pour faire évoluer la partie gauche de l'outil de nettoyage 30 en partie basse de l'espace de nettoyage 24. Le vérin 56 (à droite) est fixé en partie inférieure du rail 42 et a sa tige d'actionnement (parallèle au rail 42) vers le haut, pour faire évoluer l'autre extrémité de l'outil de nettoyage 30 en partie haute de l'espace de nettoyage. Une telle configuration est souhaitable pour le nettoyage d'ensembles de panneaux solaires inclinés.

Pour des panneaux plans on peut installer les deux vérins 54, 56 avec la tige vers le bas, comme pour le vérin 54.

La fixation des actionneurs 54, 56 se fait par tout moyen approprié, en particulier par vissage. On pourra prévoir des moyens permettant de fixer le corps d'actionneur 54.1, 56.1 à différents endroits le long du rail, ce qui donne une flexibilité d'ajustement supplémentaire. On notera encore que les actionneurs peuvent également être fixé sur la partie haute du robot 10, afin d'augmenter l'amplitude de course sur les rails.

Afin de permettre de varier l'angle de l'outil de nettoyage 30, l'un des rails est monté pivotant, ici le rail 42.

Dans la variante illustrée, le rail 42 est relié à son extrémité inférieure de manière pivotante au montant latéral 20 du châssis, par le biais d'une liaison pivot autour d'un axe de liaison s'étendant dans la direction X. La liaison pivot peut être obtenue de toute manière appropriée, par exemple une équerre 58 fixée sur le rail 42 est liée par un axe (boulon) à une autre équerre ou chape 60 fixée au montant latéral 20.

L'extrémité supérieure du rail 42 coopère avec un support de guidage 60 fixé au membre transversal 20. Le support de guidage 60 comporte une partie de fixation 60.1 à partir de laquelle s'étend une glissière 60.2 configurée pour guider l'extrémité supérieure du rail 42. Le mouvement du rail 42 dans la direction X est donc limité par la glissière 60.2, qui autorise toutefois le débattement du rail 42 autour de son pivot dans le plan (X,Y), donc dans la glissière 60.2. La courbure de la glissière 60.2 est adaptée pour suivre le débattement du rail. Dans la variante, la glissière 60.2 comprend deux flancs ajourés avec des bords inférieurs 60.3 entre lesquels glissent une paire de galets 43 fixés à l'extrémité du rail 42.

Alternativement la glissière peut être réalisée par une poutrelle (par ex. en forme de T) et l'extrémité du rail de guidage peut être équipée d'un chariot venant enserrer une forme complémentaire de la poutrelle (ex. la partie en T).

Les roues 28 sont montées par paires à un bras 62 fixé pivotant, en son centre, à un montant 20, 22. Ainsi le bras 62, qui forme une sorte d'essieu, s'étend dans la direction X, et les deux roues 28 sont montées l'une derrière l'autre dans la direction de déplacement, chacune à une extrémité du bras 62. Plus précisément, chaque montant latéral 18, 20 comprend une traverse inférieure18.3 en forme générale de V. Le bras 62 est fixé pivotant en son centre, articulé sur la partie centrale de la traverse inférieure 18.3. Cela permet donc un débattement du bras 62 dans la direction de circulation du robot 10, en fonction des irrégularités du sol. Avantageusement, le bras 62 est stabilisé par deux amortisseurs 64 qui relient à chaque fois une extrémité inférieure du montant latéral 18 à une partie de bras correspondante.

Les roues 28 sont supportées par une équerre 66 qui comprend un axe vertical (non montré) permettant le pivotement de la roue sur 360° et un axe horizontal (non montré) supportant le moyeu de la roue.

Des moyens (non visibles) sont intégrés pour entrainer les roues 28 et les diriger (commande de l'angle de la roue). Tout système d'entrainement et de commande peut être utilisé. Les roues peuvent être équipées de moteurs intégrés. La commande angulaire peut être intégrée dans le bras - essieu 62. Alternativement, la commande motrice des roues peut être réalisée de la manière décrite dans le WO2020/192806.

Le signe de référence 70 désigne une unité de commande. L'unité de commande 62 est configurée pour gérer les diverses fonctions du robot, en particulier pour gérer l'outil de nettoyage 30, c'est-à-dire tant la rotation de la brosse 32 (via la commande du moteur 35) que son déplacement dans l'espace de nettoyage 24 (via la mise en œuvre des actionneurs 54, 56). Elle est donc connectée, de manière filaire ou sans fil, aux actionneurs 54, 56 et au moteur de brosse. Pour ajuster la position de l'outil de nettoyage dans l'espace de nettoyage, l'unité de commande reçoit en outre des signaux de mesure d'une pluralité de capteurs de distance 64 agencés sur l'unité de nettoyage 30. Les capteurs de distance 64 permettent de mesurer la distance entre l'outil de nettoyage 30 et le panneau 12.

Dans la présente variante, six capteurs 64 sont agencés par paires dans la longueur de l'outil 30. Chaque capteur 64 détermine donc la distance outil 30 - panneau 12, au niveau auquel il se trouve. La distance est mesurée sensiblement au droit de chaque capteur. L'unité de commande 70 est ainsi configurée pour, principalement sur base des signaux des capteurs 64 aux extrémités, contrôler l'orientation de l'unité de nettoyage. En outre l'unité de commande exploite les signaux des capteurs 64 pour maintenir la brosse à une distance (ou gamme de distances) prédéterminée des panneaux. Cette distance peut être notamment calibrée pour que la pression exercée par la brosse n'excède pas un seuil prédéterminé, par exemple de l'ordre de 3000 à 5000 Pa.

Les capteurs 64 peuvent être basés sur tout type de technologie de télémétrie, par exemple à ultrasons ou rayons lumineux, en particulier des capteurs LIDAR ou à ultrasons. Ils sont connectés en filaire ou sans fil à l'unité de commande 70.

L'unité de commande 70 est également avantageusement configurée pour gérer le déplacement du robot 10, via la commande des roues 28.

De manière générale l'unité de commande 70 peut être un système à microprocesseurs comprenant divers matériels et programmes mettant en œuvre les fonctionnalités et principes de commande évoqués ci-dessus. L'unité de commande 70 est typiquement alimentée par une batterie (non montrée), qui alimente également les moyens d'entrainement des roues 28, et qui est préférablement rechargeable par des panneaux solaires (non montrés) montés sur le robot 10.

L'unité de commande 70 comprend en outre des moyens de communication sans fil, aptes à recevoir et à transmettre les données sur au moins un réseau de communication. La communication peut être opérée par l'intermédiaire d'un protocole tel que wifi, cellulaire (3G, 4G, 5G), Bluetooth, ou leurs équivalents. On peut ainsi connaitre le statut du robot à distance, et modifier ses paramètres opérationnels relatifs au contrôle de la brosse et/ou du parcours du robot.

## Revendications

1. Robot nettoyeur (10) de capteurs solaires comprenant :
un châssis (16) de type portique configuré pour enjamber une rangée (14) de capteurs solaires (12) et définir un espace de nettoyage (24) correspondant ;
des roues (28) fixées au châssis pour son déplacement et associées à des moyens d'entrainement ;
un outil de nettoyage (30) s'étendant dans la largeur du portique et mobile dans l'espace de nettoyage pour être positionné par rapport à la surface supérieure des capteurs solaires (12), l'outil de nettoyage étant guidé au moyen de rails de guidage (40, 42) fixés au châssis ;
des moyens d'actionnement (54, 56) pour déplacer l'outil de nettoyage le long des rails de guidage ;
au moins un capteur de distance (64) agencé pour déterminer une distance entre l'outil de nettoyage et un panneau solaire respectif ;
une unité de commande (70) connectée audit au moins un capteur de distance et configurée pour ajuster la position de l'outil de nettoyage par rapport aux panneaux solaires d'une rangée, via les moyens d'actionnement,
dans lequel :
le châssis (16) comprend deux montants latéraux (18, 20) reliés en partie supérieure par un membre transversal (22), un desdits rails (40, 42) de guidage étant fixé à chacun des montants latéraux (18, 20),
l'outil de nettoyage (30) comporte du côté de ses extrémités un élément de guidage (44) respectif, qui coopère avec un rail de guidage (40, 42) associé,
les deux rails de guidage (40, 42) définissent un plan de déplacement de l'outil de nettoyage (30) et l'un des rails de guidage (42) est monté articulé sur l'un des montants latéraux (20) de sorte à être pivotant dans le plan de déplacement, et
les moyens d'actionnement (54, 56) comprennent, aux deux extrémités de l'outil de nettoyage, un actionneur respectif lié au châssis, et connecté à l'outil de nettoyage (30), respectivement à l'élément de guidage (44).

2. Robot nettoyeur selon la revendication 1, dans lequel l'outil de nettoyage comprend au moins une brosse rotative (32) s'étendant dans la largeur du châssis selon un premier axe (L) ; la brosse rotative (32) étant préférablement une brosse cylindrique ayant un axe central (33) parallèle au, ou concentrique avec le, premier axe (L), et entrainée en rotation autour de l'axe central.

3. Robot nettoyeur selon la revendication 2, comprenant une autre brosse rotative cylindrique dont l'axe central est parallèle au premier axe et décalé de celui-ci, ladite autre brosse étant entrainée en rotation autour de son axe central.

4. Robot nettoyeur selon la revendication 2 ou 3, dans lequel la brosse cylindrique (32) a une longueur prédéterminée (L_{B}) et est constituée d'une section unique ou de plusieurs sections.

5. Robot nettoyeur selon la revendication 1, dans lequel l'outil de nettoyage comprend une pluralité de brosses rotatives axiales fixées sur une traverse s'étendant dans la largeur du portique, les brosses de la pluralité de brosses étant agencées de façon à couvrir la largeur du portique.

6. Robot nettoyeur selon l'une quelconque des revendications précédentes, dans lequel les éléments de guidage (44) comprennent une partie de guidage (46), apte à se déplacer linéairement le long du rail de guidage (40, 42), et une partie de jonction (48), fixée de manière articulée à un cadre support (34) de l'outil de nettoyage.

7. Robot nettoyeur selon l'une quelconque des revendications précédentes, dans lequel le rail de guidage (42) monté articulé est fixé pivotant du côté d'une extrémité ; et l'extrémité opposée coopère avec un support de guidage (60), lequel présente une courbure conformé pour accompagner l'extrémité de rail de guidage pendant le pivotement.

8. Robot nettoyeur selon l'une quelconque des revendications précédentes, dans lequel les actionneurs sont des actionneurs linéaires (54, 56) dont une tige d'actionnement (54.2, 56.2) est connectée à l'outil de nettoyage (30), respectivement à l'élément de guidage (44), les actionneurs linéaires (54, 56) étant préférablement montés sur chacun des rails de guidage (40, 42), de préférence de manière ajustable le long du rail de guidage.

9. Robot nettoyeur selon la revendication 8 ou 9, dans lequel un actionneur linéaire (56) est fixé en partie basse du rail, avec sa tige d'actionnement orientée vers le haut ; et l'autre actionneur linéaire (54) est fixé en partie haute du rail, avec sa tige d'actionnement orientée vers le bas.

10. Robot nettoyeur selon la revendication 8 ou 9, dans lequel les deux actionneurs linéaires sont fixés en partie haute du châssis, en particulier aux rails, et ont leur tige d'actionnement respective tournée vers le bas.

11. Robot nettoyeur selon l'une quelconque des revendications 1 à 8, dans lequel les moyens d'actionnement comprennent des actionneurs fixés au châssis, par exemple en partie supérieure, notamment sur l'élément transversal, et des systèmes de câbles et poulies, ou des systèmes à chaines ou crémaillère, reliant les actionneurs aux éléments de guidage.

12. Robot nettoyeur selon l'une quelconque des revendications précédentes, dans lequel ledit au moins un capteur de distance comprend un LIDAR, un système émetteur et détecteur d'ultrasons, ou une caméra ; et/ou.
dans lequel le robot comprend en outre un réservoir de liquide de nettoyage alimentant, via un circuit de distribution, des buses.

13. Robot nettoyeur selon l'une quelconque des revendications précédentes, dans lequel les roues sont pivotantes à 360° et au moins une roue, de chaque côté du châssis est motrice ; et/ou
dans lequel l'unité de commande est en outre configurée pour commander les roues motrices et pour déplacer le robot nettoyeur le long d'un parcours prédéterminé de panneaux solaires à nettoyer ; et/ou
dans lequel deux roues (28) sont montées supportées sous chaque montant latéral (18, 20) par un bras-essieu (62), le bras (62) étant fixé pivotant en partie inférieure du montant latéral (18, 20).

14. Robot nettoyeur selon la revendication précédente, dans lequel un dispositif amortisseur (64) respectif relie le bras au montant latéral de chaque côté du point de pivotement.

15. Robot nettoyeur selon l'une quelconque des revendications précédentes, comprenant en outre une source d'alimentation électrique, de préférence une batterie, en particulier une batterie rechargeable couplée à des capteurs photovoltaïques portés par le châssis.

## Patentansprüche

1. Reinigungsroboter (10) für Solarmodule, umfassend:
ein Gestell (16) vom Portaltyp, das eingerichtet ist, um eine Reihe (14) von Solarmodulen (12) zu überspannen und einen entsprechenden Reinigungsraum (24) zu definieren;
Räder (28), die an dem Gestell für dessen Bewegung befestigt sind und Antriebsmitteln zugeordnet sind;
ein Reinigungswerkzeug (30), das sich in der Breite des Portals erstreckt und in dem Reinigungsraum beweglich ist, um relativ zu der oberen Fläche der Solarmodule (12) positioniert zu werden, wobei das Reinigungswerkzeug mittels Führungsschienen (40, 42) geführt ist, die an dem Gestell befestigt sind;
Betätigungsmittel (54, 56), um das Reinigungswerkzeug entlang der Führungsschienen zu bewegen;
wenigstens einen Abstandssensor (64), der angeordnet ist, um einen Abstand zwischen dem Reinigungswerkzeug und einem jeweiligen Solarpanel zu ermitteln;
eine Steuereinheit (70), die an den wenigstens einen Abstandssensor angeschlossen ist und eingerichtet ist, um, über die Betätigungsmittel, die Position des Reinigungswerkzeugs relativ zu den Solarpanels einer Reihe zu verstellen,
wobei:
das Gestell (16) zwei seitliche Säulen (18, 20) umfasst, die im oberen Teil durch ein Querglied (22) verbunden sind, wobei eine der Führungsschienen (40, 42) an jeder der seitlichen Säulen (18, 20) befestigt ist,
das Reinigungswerkzeug (30) auf Seiten seiner Enden ein jeweiliges Führungselement (44) aufweist, das mit einer zugeordneten Führungsschiene (40, 42) zusammenwirkt,
die zwei Führungsschienen (40, 42) eine Bewegungsebene des Reinigungswerkzeugs (30) definieren und eine der Führungsschienen (42) an einer der seitlichen Säulen (20) gelenkig gelagert ist, so dass sie in der Bewegungsebene schwenkbar ist und
die Betätigungsmittel (54, 56), an den zwei Enden des Reinigungswerkzeugs, einen jeweiligen Aktuator umfassen, der mit dem Gestell verbunden ist und an das Reinigungswerkzeug (30) beziehungsweise an das Führungselement (44) angeschlossen ist.

2. Reinigungsroboter nach Anspruch 1, wobei das Reinigungswerkzeug wenigstens eine drehbare Bürste (32) umfasst, die sich in der Breite des Gestells gemäß einer ersten Achse (L) erstreckt; wobei die drehbare Bürste (32) vorzugsweise eine zylindrische Bürste ist, die eine Mittelachse (33) aufweist, die parallel zu, oder konzentrisch mit, der ersten Achse (L) , ist, und die zur Drehung um die Mittelachse angetrieben ist.

3. Reinigungsroboter nach Anspruch 2, umfassend eine weitere zylindrische Bürste, deren Mittelachse zu der ersten Achse parallel und zu ihr versetzt ist, wobei die weitere Bürste zur Drehung um ihre Mittelachse angetrieben ist.

4. Reinigungsroboter nach Anspruch 2 oder 3, wobei die zylindrische Bürste (32) eine zuvor festgelegte Länge (L_{B}) hat und aus einem einzigen oder aus mehreren Abschnitten besteht.

5. Reinigungsroboter nach Anspruch 1, wobei das Reinigungswerkzeug eine Mehrzahl von axialen drehbaren Bürsten umfasst, die auf einer Querleiste befestigt sind, die sich in der Breite des Portals erstreckt, wobei die Bürsten der Mehrzahl von Bürsten so angeordnet sind, dass sie die Breite des Portals abdecken.

6. Reinigungsroboter nach einem der vorhergehenden Ansprüche, wobei die Führungselemente (44) einen Führungsteil (46), der entlang der Führungsschiene (40, 42) linear bewegbar ist, und einen Verbindungsteil (48), der an einem Tragrahmen (34) des Reinigungswerkzeugs gelenkig befestigt ist, umfassen.

7. Reinigungsroboter nach einem der vorhergehenden Ansprüche, wobei die gelenkig gelagerte Führungsschiene (42) auf Seiten eines Endes schwenkbar befestigt ist; und das gegenüberliegende Ende mit einem Führungsträger (60) zusammenwirkt, der eine Krümmung aufweist, die so angepasst ist, dass sie das Ende der Führungsschiene während der Schwenkung begleitet.

8. Reinigungsroboter nach einem der vorhergehenden Ansprüche, wobei die Aktuatoren Linearaktuatoren (54, 56) sind, von denen eine Betätigungssstange (54.2, 56.2) an das Reinigungswerkzeug (30) beziehungsweise an das Führungselement (44) angeschlossen ist, wobei die Linearaktuatoren (54, 56) vorzugsweise auf jeder der Führungsschienen (40, 42), bevorzugt entlang der Führungsschiene verstellbar, gelagert sind.

9. Reinigungsroboter nach Anspruch 8 oder 9, wobei ein Linearaktuator (56), mit seiner Bestätigungsstange nach oben ausgerichtet, im unteren Teil der Schiene befestigt ist; und der andere Linearaktuator (54), mit seiner Bestätigungsstange nach unten ausgerichtet, im oberen Teil der Schiene befestigt ist.

10. Reinigungsroboter nach Anspruch 8 oder 9, wobei die zwei Linearaktuatoren im oberen Teil des Gestells, insbesondere auf Schienen, befestigt sind und ihre jeweilige Bestätigungsstange nach unten gekehrt ist.

11. Reinigungsroboter nach einem der Ansprüche 1 bis 8, wobei die Bestätigungsmittel Aktuatoren, die an dem Gestell, zum Beispiel im oberen Teil, insbesondere auf dem Querelement befestigt sind, und Seil- und Rollensysteme, oder Ketten- oder Zahnstangensysteme, die die Aktuatoren mit den Führungselementen verbinden, umfassen.

12. Reinigungsroboter nach einem der vorhergehenden Ansprüche, wobei der wenigstens eine Abstandssensor einen LIDAR, einen Ultraschallgeber und -sensor oder eine Kamera umfasst; und/oder
wobei der Roboter ferner einen Reinigungsflüssigkeitstank umfasst, der, über einen Verteilerkreislauf, Düsen speist.

13. Reinigungsroboter nach einem der vorhergehenden Ansprüche, wobei die Räder um 360 Grad schwenkbar sind und wenigstens ein Rad, auf jeder Seite des Gestells, ein Antriebsrad ist; und/oder
wobei die Steuereinheit ferner eingerichtet ist, um die Antriebsräder zu steuern und um den Reinigungsroboter entlang einer zuvor festgelegten Strecke von zu reinigenden Solarpanels zu bewegen; und/oder wobei zwei Räder (28) unter jeder seitlichen Säule (18, 20) von einem Achsarm (62) gestützt gelagert sind, wobei der Arm (62) im unteren Teil der seitlichen Säule (18, 20) schwenkbar befestigt ist.

14. Reinigungsroboter nach dem vorhergehenden Anspruch, wobei eine jeweilige Dämpfungsvorrichtung (64) den Arm mit der seitlichen Säule auf jeder Seite des Schwenkpunkts verbindet.

15. Reinigungsroboter nach einem der vorhergehenden Ansprüche, ferner umfassend eine elektrische Versorgungsquelle, bevorzugt eine Batterie, insbesondere eine wiederaufladbare Batterie, die mit von dem Gestell getragenen Photovoltaikmodulen gekoppelt ist.

## Claims

1. A cleaning robot (10) for cleaning solar collectors comprising:
a gantry-type frame (16) configured to span a row (14) of solar collectors (12) and define a corresponding cleaning space (24);
wheels (28) that are fixed to the frame in order to move the latter and are associated with drive means;
a cleaning tool (30) extending across the width of the gantry and able to move in the cleaning space in order to be positioned with respect to the upper surface of the solar collectors (12), the cleaning tool being guided by means of guide rails (40, 42) fixed to the frame;
actuating means (54, 56) to move the cleaning tool along the guide rails;
at least one distance sensor (64) arranged to determine a distance between the cleaning tool and a respective solar panel;
a control unit (70) connected to said at least one distance sensor and configured to adjust the position of the cleaning tool with respect to the solar panels of a row by way of the actuating means,
wherein:
the frame (16) comprises two lateral uprights (18, 20) that are connected in their upper part by a transverse member (22), one of said guide rails (40, 42) being fixed to each of the lateral uprights (18, 20),
the cleaning tool (30) has towards each of its ends a respective guide element (44) which cooperates with an associated guide rail (40, 42),
the two guide rails (40, 42) define a plane of movement for the cleaning tool (30) and one of the guide rails (42) is mounted in articulated manner on one of the lateral uprights (20) so as to be able to pivot in the plane of movement, and
the actuating means (54, 56) comprise, at the two ends of the cleaning tool, a respective actuator connected to the frame and connected to the cleaning tool (30), respectively to the guide element (44).

2. The cleaning robot according to claim 1, wherein the cleaning tool comprises at least one rotary brush (32) extending across the width of the frame along a first axis (L); the rotary brush (32) preferably being a cylindrical brush having a central shaft (33) parallel to, or concentric with, the first axis (L), and being driven in rotation about the central shaft.

3. The cleaning robot according to claim 2, comprising another cylindrical rotary brush, the central shaft of which is parallel to the first axis and offset from the latter, said other brush being driven in rotation about its central shaft.

4. The cleaning robot according to claim 2 or 3, wherein the cylindrical brush (32) has a predetermined length (L_{B}) and is composed of a single section or a plurality of sections.

5. The cleaning robot according to claim 1, wherein the cleaning tool comprises a plurality of axial rotary brushes fixed to a cross-piece extending across the width of the gantry, the brushes of the plurality of brushes being arranged so as to cover the width of the gantry.

6. The cleaning robot according to any one of the preceding claims, wherein the guide elements (44) comprise a guide part (46), capable of moving linearly along the guide rail (40, 42), and a connecting part (48) fixed in articulated manner to a support frame (34) of the cleaning tool.

7. The cleaning robot according to any one of the preceding claims, wherein the guide rail (42) mounted in articulated manner is fixed pivotably at one end; and the opposite end cooperates with a guide support (60) which has a curvature shaped to accompany the guide rail end during pivoting.

8. The cleaning robot according to any one of the preceding claims, wherein the actuators are linear actuators (54, 56), an actuating rod (54.2, 56.2) of which is connected to the cleaning tool (30), respectively to the guide element (44), the linear actuators (54, 56) preferably being mounted on each of the guide rails (40, 42), preferably in adjustable manner along the guide rail.

9. The cleaning robot according to claim 8 or 9, wherein a linear actuator (56) is fixed at the lower part of the rail with its actuating rod directed upwards; and the other linear actuator (54) is fixed at the upper part of the rail with its actuating rod directed downwards.

10. The cleaning robot according to claim 8 or 9, wherein the two linear actuators are fixed at the upper part of the frame, in particular to the rails, and have their respective actuating rod facing downwards.

11. The cleaning robot according to any one of claims 1 to 8, wherein the actuating means comprise actuators fixed to the frame, for example in the upper part, in particular on the transverse element, and cable and pulley systems, or chain or rack systems connecting the actuators to the guide elements.

12. The cleaning robot according to any one of the preceding claims, wherein said at least one distance sensor comprises a LIDAR, an ultrasound transmitter and detector system, or a video camera; and/or
wherein the robot further comprises a cleaning liquid tank which feeds nozzles by way of a distribution circuit.

13. The cleaning robot according to any one of the preceding claims, wherein the wheels are pivotable by 360° and at least one wheel on either side of the frame is a drive wheel; and/or
wherein the control unit is further configured to control the drive wheels and to move the cleaning robot along a predetermined route of solar panels to be cleaned; and/or
wherein two wheels (28) are mounted supported under each lateral upright (18, 20) by an axle arm (62), the arm (62) being fixed pivotably at the lower part of the lateral upright (18, 20).

14. The cleaning robot according to the preceding claim, wherein a respective shock-absorbing device (64) connects the arm to the lateral upright on either side of the pivot point.

15. The cleaning robot according to any one of the preceding claims, further comprising an electric power source, preferably a battery, in particular a rechargeable battery coupled to photovoltaic collectors carried by the frame.
